# EUROPÄISCHE PATENTSCHRIFT

(11) **EP 3 008 871 B1**
(45) Veröffentlichungstag und Bekanntmachung des Hinweises auf die Patenterteilung: **20.01.2021**
(21) Anmeldenummer: 14731575.8
(22) Anmeldetag: 11.06.2014
(51) Int. Cl.: H04L 29/06, H04L 29/08, H04L 12/28, H04W 12/08

(54) **HIERARCHISCHES AUTHENTIFIZIERUNGS- UND AUTORISIERUNGSSYSTEM**
HIERARCHICAL AUTHENTICATION AND AUTHORIZATION SYSTEM
SYSTÈME D'AUTHENTIFICATION ET D'AUTORISATION HIÉRARCHIQUE

(30) Priorität: 12.06.2013 DE 102013106119
(43) Veröffentlichungstag der Anmeldung: 20.04.2016
(73) Patentinhaber: Deutsche Telekom AG, 53113 Bonn (DE)
(72) Erfinder: UNTERSCHÜTZ, Thomas, 65443 Weiterstadt (DE)
(74) Vertreter: 2K Patentanwälte Blasberg Kewitz & Reichel
(86) Internationale Anmeldenummer: PCT/EP2014/062147
(87) Internationale Veröffentlichungsnummer: WO 2014/198782

(56) Entgegenhaltungen:
- EP-A1- 1 833 222
- EP-B1- 1 965 595
- DE-A1-102011 117 186
- GB-A- 2 479 916
- US-A1- 2008 282 182
- US-A1- 2010 122 091
- US-B1- 7 716 489

## Beschreibung

Die Erfindung betrifft ein System S zur Unterstützung von Haussteuerungsaktivitäten. Der Nutzer soll in seiner Wohnung unter Verwendung von S z.B. Lichter ein- und ausschalten können, eine Alarmanlage betreiben oder eine Waschmaschine fernsteuern. Weitere solcher Anwendungsfälle sind denkbar.

### Gebiet der Erfindung

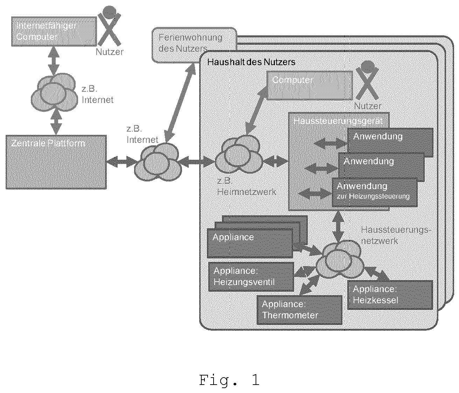

Die Figur 1 gibt einen Überblick über die im Folgenden benannten und beschriebenen Elemente von ***S*** im Kontext des o.g. Beispiels.

Zur Bereitstellung von Haussteuerungsaktivitäten verfügt ***S*** über ein zentrales Gerät, das Haussteuerungsgerät im Haushalt des Nutzers. An das Haussteuerungsgerät sind durch ***S*** steuerbare Appliances wie z.B. Sensoren oder Aktoren angeschlossen. Bei der Appliance handelt es sich in der Regel um Hardware im Haushalt des Nutzers (z.B. Lichtschalter, Bewegungsmelder etc.), wohingegen die Anwendung in der Regel als Software zu betrachten ist. Es kann natürlich auch Überschneidungen geben. Im vorliegenden Beispiel finden sich insbesondere ein durch ***S*** steuerbares Heizungsventil, ein von ***S*** auslesbares Thermometer sowie ein über ***S*** steuerbarer Heizkessel.
Appliances wie Sensoren, Aktoren wie z.B. Bewegungsmelder, Fensterschließer etc. kommunizieren über das Haussteuerungsnetzwerk mit Anwendungen auf dem Haussteuerungsgerät. Im vorliegenden Beispiel werden Temperaturdaten an die Heizungssteuerungsanwendung kommuniziert.
Das Haussteuerungsgerät kann eine Vielzahl von Anwendungen gleichzeitig betreiben. Sie dienen zur Haussteuerung z.B. zur Lichtsteuerung, zur Steuerung der Alarmanlage, einer Klimaanlage oder wie in unserem Beispiel zur Heizungssteuerung.
Die Anwendung zur Heizungssteuerung veranlasst dann das Öffnen oder das Schließen der Heizungsventile und veranlasst ggf. eine Betriebsartänderung des Heizkessels. Dies geschieht im vorliegenden Beispiel nach einem von der Anwendung spezifisch angebotenen Temperatursteuerungsverfahren. Neben diesem vollständig automatisierten Betrieb bietet die Heizungssteuerungsanwendung dem Nutzer die Möglichkeit, die Temperatur in einzelnen Zimmern jederzeit manuell anzupassen.

Aus der DE 10 2005 021 854 B4 ist ein Verfahren bekannt zur optimierten Vergabe von Zugriffsrechten auf mittels eines Sicherheitsmanagementsystems verwaltete IT-Ressourcen, bei dem
▪ eine Sicherheitsdomäne nach Maßgabe wenigstens einer Eigenschaft von IT-Ressourcen festgelegt wird,
▪ eine Mehrzahl von Berechtigungsprofilen für die Sicherheitsdomäne vorgesehen wird,
▪ Benutzergruppen der Sicherheitsdomäne zugeordnet werden,
▪ eine Verknüpfung der der Sicherheitsdomäne zugeordneten Benutzergruppen mit für die Sicherheitsdomäne vorgesehenen Berechtigungsprofilen vorgenommen wird,
▪ IT-Ressourcen nach Maßgabe der die Sicherheitsdomäne festlegenden Eigenschaft von IT-Ressourcen der Sicherheitsdomäne zugeordnet werden, und
▪ der Sicherheitsdomäne zugeordnete Benutzergruppen nach Maßgabe der mit ihnen verknüpften Berechtigungsprofilen Zugriffsrechte auf die der Sicherheitsdomäne zugeordnete IT-Ressourcen erhalten.

Die Veröffentlichung gibt allerdings keine Anleitung für eine hierarchische Authentifizierung und Autorisierung zwischen einer zentralen Plattform und einer lokal betreibbaren Einheit, wie einem Kundengerät in einer inhomogenen Gerätearchitektur.

Die GB 2479916 A, EP 1 833 222 A1, US 7 7 16 489 B1, EP 1 965 595 B1, US 2010/122091 A1. US 2008,282182 A1, offenbaren Zugriffstechniken auf Computersysteme.

### Überblick über die Erfindung:

Gelöst werden die oben genannten Probleme durch ein Verfahren und ein System mit den Merkmalen der unabhängigen Ansprüche.

Im Einzelnen handelt es sich um ein Verfahren zur Steuerung des Zugriffs auf ein System zur Unterstützung von Haussteuerungsaktivitäten, umfassend eine zentrale Plattform, auf die über das Internet durch einen Benutzer zugegriffen wird;
ein Haussteuerungsgerät, das im Haushalt des Benutzers angeordnet ist, und das mit der zentralen Plattform über das Internet verbunden ist, und das mit Appliances im Haushalt des Benutzers verbunden ist;
Anwendungen, die auf dem Haussteuerungsgerät laufen, um die Appliances zu steuern, regeln und/oder zu programmieren; gekennzeichnet durch eine hierarchische Autorisierung des Benutzers,
wobei sich im online Modus, bei dem eine Verbindung zwischen zentraler Plattform und Haussteuerungsgerät gegeben ist, der Zugang von der zentralen Plattform gewährt wird, und in einer möglichen Ausführungsform die Benutzerrechte von der zentralen Plattform abgeleitet werden, und der Benutzer nur das Recht auf Zugriff auf das Hausteuerungsgerät hat, wenn das Recht auf den Zugriff auf die zentrale Plattform vorhanden ist,
und wobei im offline Modus, bei dem eine Verbindung zwischen zentraler Plattform und dem Haussteuerungsgerät nicht gegeben ist, lokal auf dem Haussteuerungsgerät abgelegte Rechte den Zugriff steuern,
wobei der Zugriff vom Haussteuerungsgerät bestimmt wird, und sich in einer möglichen Ausführungsform die Benutzerrechte an den Anwendungen vom Hausteuerungsgerät ableiten, und ein Benutzer nur das Recht auf Zugriff auf die Anwendungen hat, wenn das Recht auf den Zugriff sowohl auf das Haussteuerungsgerät als auch auf die zentrale Plattform vorhanden ist.

Die Steuerung des Zugriffs wird somit von oben nach unten vorgegeben, wobei eine zentrale Plattform im Internet, die für einen Benutzer zugänglich ist, als höchste Hierarchieebene anzusehen ist.

Im Zusammenhang mit diesem Offline Status gibt es eine Reihe von Spezialfällen.

So kann z.B. der Nutzer sein Passwort an der zentralen Plattform ändern. Das Haussteuerungsgerät ist aber gerade offline und bleibt das auch noch eine Weile. D.h. Ein Zugriff auf das Haussteuerungsgerät erfolgt (noch) mit dem alten/veraltetem Passwort.

Alternativ kann Z.B. der Nutzer sein Passwort an der zentralen Plattform ändern. Das Haussteuerungsgerät ist aber gerade offline. Mit dem nächsten Online-gehen des Haussteuerungsgeräts wird das Passwort des Nutzers auf das Haussteuerungsgerät übertragen. Das Haussteuerungsgerät geht dann erneut offline. Der Nutzer kann sich ab diesem Moment am Haussteuerungsgerät mit seinen geänderten Passwort anmelden.

In einer weiteren Alternative kann z.B. der Nutzer sein Passwort an der zentralen Plattform ändern. Das Haussteuerungsgerät ist aber gerade offline. Mit dem nächsten online gehen des Haussteuerungsgeräts wird das alte/veraltete Passwort des Nutzers von der zentralen Plattform auf dem Haussteuerungsgerät als ungültig gekennzeichnet. Wahlweise kann es das Verfahren erlauben oder verbieten, dass sich der Nutzer (noch) mit seinem als veraltet gekennzeichnetem Passwort lokal am Haussteuerungsgerät anmeldet.

In noch einer weiteren Alternative kann z.B. der Nutzer sein Passwort an der zentralen Plattform ändern. Das Haussteuerungsgerät ist aber gerade offline. Mit dem nächsten online gehen des Haussteuerungsgeräts wird das alte/veraltete Passwort des Nutzers von der zentralen Plattform auf dem Haussteuerungsgerät als ungültig gekennzeichnet. Der Nutzer wird bei der nächsten Nutzung des Haussteuerungsgeräts, obwohl er bereits von der zentralen Plattform authentifiziert wurde, noch einmal vom Haussteuerungsgerät nach dem Passwort gefragt. Das Passwort wird vom Haussteuerungsgerät an der zentralen Plattform "ge-challenged", d.h. die Überprüfen des Passworts wird veranlaßt. Nach der (positiven) Überprüfung wird das Passwort auf dem Haussteuerungsgerät gespeichert. Das Haussteuerungsgerät geht dann wieder offline. Der Nutzer kann sich am Haussteuerungsgerät mit seinen geänderten Passwort anmelden.

In noch einer weiteren Alternative kann z.B. in den oben genannten Verfahren das Passwort im Klartext oder verschlüsselt übertragen werden, z.B. wird in den oben genannten Verfahren an Stelle des Passworts ein Hashwert des Passworts übertragen.

In noch einer weiteren Alternative kann z.B. im Rahmen der oben genannten Verfahren das Passwort, oder ein Hashwert des Passworts auf dem Haussteuerungsgerät durch Software- oder Hardware Maßnahmen vor unzulässigem Zugriff gesichert werden. Maßnahmen dafür sind beispielsweise die Verwendung eines Trusted Platform Moduls, Verschlüsselung und/oder Verstückelung.

Hierdurch kann an einer zentralen Stelle, auch über mobile Endgeräte, ein Zugang zum Haussteuerungsgerät hergestellt werden, indem auf die zentrale Plattform zugegriffen wird, die dann wiederum den Zugriff und die Steuerung der darunter liegenden Komponenten regelt. Egal, ob die zentrale Plattform über das Internet angesprochen wird oder das Haussteuerungsgerät in einem lokalen Netzwerk, sieht in der bevorzugten Ausführungsform für einen mobilen Benutzer, der zum Beispiel ein mobiles Endgerät wie ein iPhone oder Android Telefon verwendet, auf dem entsprechende Anwendung installiert sind, die Oberfläche identisch aus. Es kann jedoch auch Abweichungen geben. Die Berechtigung des Zugriffs auf einzelne Anwendungen und Haussteuerungsgeräte wird jedoch von der zentralen Plattform verwaltet und nach unten durch die Hierarchie vererbt. Sollten zum Beispiel mehrere Haussteuerungsgeräte über einen Account durch die zentrale Plattform verwaltet werden, so können zum Beispiel die Benutzerrechte kopiert werden von einem Haussteuerungsgerät auf das andere. Auch können unterschiedliche Benutzerrechte innerhalb eines Accounts für unterschiedliche Haussteuerungsgeräte vorhanden sein.

In einer weiteren Ausführungsform können Rechte auf den Zugriff auf Funktionen der Anwendung gegeben sein, und ein Benutzer hat nur das Recht auf den Zugriff auf die Funktion, wenn das Recht auf den Zugriff auf die Anwendung gegeben ist. Hierbei ist zu beachten, dass Anwendungen, die zum Beispiel eine Heizung steuern, unterschiedlichste Funktionen bereitstellen. So kann zum Beispiel die Heizkennlinie, die zum Beispiel durch die Außentemperatur bestimmt wird, nur durch einen Benutzer mit bestimmten Rechten verändert werden. Die Temperatureinstellung hingegen kann von einer Vielzahl von anderen Personen geändert werden. Die Anwendungen sind somit ebenfalls bezüglich ihrer Benutzerrechte fein steuerbar, wobei sich jedoch diese Benutzerrechte ebenfalls von oben ableiten können. Grundsätzlich sind folgende Optionen denkbar. Die Rechte sind aber zunächst lokal definiert; sie leiten sich nicht (notwendiger weise) von der oberen Ebene ab, jedoch wird der Zugang bzw. Zugriff auf die Ebene von der darüber liegenden bestimmt. Alternativ könnten die auch von oben nach unten vererbet werden

In einer bevorzugten Ausführungsform autorisiert sich der Benutzer im online Modus an der zentralen Plattform, die die Rechte des Haussteuerungsgeräts und der Anwendung bestimmt. Die zentrale Plattform verwaltet somit eine Vielzahl von Benutzer Accounts, in denen sich jeweils eine oder mehrere Haussteuerungsgeräte registriert haben. Die Registrierung kann automatisch erfolgen zum Beispiel anhand einer eindeutigen Seriennummer des Haussteuerungsgeräts. Sobald sich das Haussteuerungsgerät an der zentralen Plattform anmeldet, wird gefragt, ob ein neuer Account anzulegen ist, oder ob das Haussteuerungsgerät in einen bestehenden Account einzufügen ist. Dies kann automatisch über eine Weboberfläche gesteuert werden. Der Zugang zum Account auf der zentralen Plattform kann durch Smartcards, Token oder Passwort und Logindaten erfolgen. Weitere Alternativen sind natürlich denkbar.

Grundsätzlich ist zu beachten, dass das Haussteuerungsgerät ebenfalls im offline Modus zu betreiben sein soll. Der Offlinemodus liegt immer dann vor, wenn keine InternetVerbindung zur zentralen Plattform gegeben ist. In einem solchen Zustand, kann über ein lokales Netzwerk innerhalb des Hauses, das zum Beispiel schnurgebunden als LAN oder schnurlos als WLAN ausgebildet ist, auf das Haussteuerungsgerät zugegriffen werden. Die Oberfläche, die dabei bereitgestellt wird, entspricht vorzugsweise der, die durch die zentrale Plattform im online Modus bereitgestellt wird. Jedoch können einige Funktionen nicht aktiviert sein. Ferner können Rechte eingeschränkt sein. In der Regel ist die Menge der Rechte, die im offline Modus bereitgestellt wird, eine Untermenge der Rechte, die im online Modus bereitgestellt wird. So ist es denkbar, dass im offline Modus bestimmte Datensicherungsmaßnahmen und Wiederherstellungsmaßnahmen nicht möglich sind. Auch ist es nicht möglich auf statistische Informationen zurückzugreifen, die durch die zentrale Plattform bereitgestellt werden. Ebenfalls ist die Installation von Programmen eingeschränkt. Die Rechtesteuerung kann grundsätzlich auch funktional gesteuert sein, so dass bestimmte Rechte in Abhängigkeit des offline oder online Modus gegeben sind oder nicht. Es versteht sich, dass Funktionen, die nur durchführbar sind, wenn sich das System im Onlinemodus befindet, im offline Modus nicht bereitgestellt werden können, so dass auch dafür die Rechte nicht gegeben sein können. Es ist jedoch möglich, dass eine Konfiguration darüber hinaus gehend denkbar ist. So können die lokal abgelegten Rechte Regeln im offline Modus immer dann gelten, wenn sich das Haussteuerungsgerät im offline Modus befindet. Es ist somit eine differenzierte Rechtevergabe für den offline Modus denkbar. Im offline Modus autorisiert sich der Benutzer am lokalen Haussteuerungsgerät, wobei die Benutzerrechte lokal vom Haussteuerungsgerät bestimmt werden und somit ein Zugriff auf die Anwendungen ermöglicht wird. In einer möglichen Ausführungsform werden die anwendungsspezifischen Benutzerrechte an den Anwendungen auch bestimmt.

Hieraus ergibt sich in einer bevorzugten Ausführungsform, dass sich die lokalen Benutzerrechte auf dem Haussteuerungsgerät von den Benutzerrechten der zentralen Plattform ableiten und dort gespeichert werden oder von diesen abweichen, so dass im offline Modus andere Rechte gelten als im online Modus.

In einer bevorzugten Ausführungsform kann über die zentrale Plattform Zugriff auf einen Anwendungs-Shop gegeben sein, um Anwendungen für das Haussteuerungsgerät herunterzuladen. Diesen Anwendung-Shop kann man sich vorstellen, wie einen AppStore für mobile Endgeräte, bei dem der Benutzer kostenfreie oder kostenpflichtige Anwendungen für die Steuerung der Appliances im Hause herunterladen kann. So kann zum Beispiel der Hersteller einer Appliance seine Anwendungen entsprechend im Shop hinterlegen, so dass diese einfach installiert werden können. Der Shop kann mit zertifizierten Anwendungen ausgestattet sein, die nur auf zertifizierten Haussteuerungsgeräten ablaufen können. Entsprechende Zertifizierungen können durch Zertifikate erreicht werden. Es ist zu beachten, dass auf der zentralen Plattform die Anwendungen verwaltet werden, die auf dem Haussteuerungsgerät installiert sind. Auch werden deren Arbeits- und Konfigurationsparameter regelmäßig zentral gesichert. Hierdurch ist es einerseits möglich eine schnelle Wiederherstellung des aktuellen Zustands des Haussteuerungsgerätes zu erreichen, wenn dieses ausgefallen ist, oder es kann eine Übertragung der gesamten Konfiguration auf ein anderes neues Haussteuerungsgerät vorgenommen werden. Die Synchronisation der Daten und Konfigurationsparameter kann kontinuierlich oder in bestimmten Zeitabfolgen erfolgen. Zusätzlich ist es möglich ein manuelles Back-up durchzuführen, in dem ein aktueller Status eines Haussteuerungsgerätes zentral gesichert wird. Hierdurch ist es möglich immer wieder einen bestimmten Status in das Haussteuerungsgerät einzuspielen.

Wie bereits oben ausgeführt wurde, ist in einer weiteren möglichen Ausführungsform angedacht, dass die zentrale Plattform eine Vielzahl von Haussteuerungsgeräten für einen und/oder mehrere Benutzer verwaltet.

Die zentrale Plattform nimmt im online Modus die Anfragen und/oder Kommandos an das Haussteuerungsgerät an und leitet diese weiter. Hierdurch ist es möglich, dass durch mobile Endgeräte über das Internet eine Ansteuerung des Haussteuerungsgerätes erfolgen kann, ohne dass virtuelle private Netzwerke aufgebaut werden müssen. Die zentrale Plattform kann somit als Anlaufstelle im Internet dienen, um Kommandos anzunehmen und diese zu bearbeiten, in dem diese an das Haussteuerungsgerät weitergeleitet werden. Die Kommunikation kann somit durch Standardprotokolle wie HTTPS oder ähnliche Ansätze die SSL erfolgen, die jedes mobile Endgerät mittlerweile unterstützt.

Formal betrachtet besitzt der Nutzer bei ***S*** eine Identität (z.B. Nutzername). Der Nutzer soll mit dieser Identität und einem einzigen, dazugehörenden Credential (z.B. Nutzername und Passwort), auf alle zu ***S*** gehörenden Komponenten zugreifen können.

Er verwendet die Identität und die Credentials
▪ für den Zugang zur zentralen Plattform über das Internet sowohl als auch
   für den Zugang zum Haussteuerungsgerät *über* das Internet und *über* die Plattform.
▪ für den lokalen Zugang über zum Haussteuerungsgerät über das Heimnetzwerk.

Für alle zu ***S*** gehörenden Komponenten (z.B. zentrale Plattform, Haussteuerungsgerät oder Anwendungen) lassen sich komponentenspezifische Rechte definieren. Die Rechte sind von Komponente zu Komponente unterschiedlich. Die unterschiedlichen Rechte werden durch ***S*** an Identitäten geheftet.

Die folgenden Beispiele dienen zur Illustration von Rechten verschiedener Komponenten: ***A*** und ***B*** seien die Identitäten zweier Nutzer.
▪ ***A*** darf die allgemeinen Geschäftsbedingungen unterschreiben (Komponente: zentrale Plattform)
▪ ***B*** darf das System über das Internet nutzen (zentrale Plattform)
▪ ***A*** darf eine Anwendung auf diesem Haussteuerungsgerät installieren und nutzen (Haussteuerungsgerät).
▪ ***B*** darf Anwendungen auf diesem Haussteuerungsgerät nutzen (Haussteuerungsgerät)
▪ ***A*** Darf die Raumtemperatur über den sehr hohen Wert über 23° hinaus einstellen (Heizungssteuerungsanwendung)
▪ ***B*** darf ein anderes Temperaturszenario auswählen (Heizungssteuerungsanwendung).

Der Nutzer soll nur dann auf ein Haussteuerungsgerät zugreifen dürfen, wenn er sowohl in der zentralen Plattform als Nutzer bekannt ist, als auch wenn er Nutzungsrechte an dem Haussteuerungsgerät besitzt.
Der Nutzer soll nur dann auf Anwendungen zugreifen dürfen, wenn er sowohl im Haussteuerungsgerät als Nutzer bekannt ist, als auch wenn er Nutzungsrechte an der Anwendung besitzt.

Für den Nutzer sollen bei fehlerhafter oder unterbrochener Verbindung (offline Modus) zwischen dem Haussteuerungsgerät und der zentralen Plattform alle Funktionen des Haussteuerungsgeräts verfügbar und ausführbar sein. Die offline Verfügbarkeit *aller* Funktionen kann selbstverständlich nur gewährleistet sein, wenn die zentrale Plattform keinen unabdingbaren Beitrag zur betrachteten Funktion leistet: Beispielsweise kann eine bei der zentralen Plattform hinterlegte Sicherungskopie nur dann wiederhergestellt werden, wenn es eine Verbindung zwischen Haussteuerungsgerät und zentraler Plattform gibt.

Neben der Heizungsanwendung kann der Nutzer, sofern ***S*** über z.B. einen geeigneten Shop verfügt, weitere Anwendungen kaufen und mittels ***S*** auf seinem Haussteuerungsgerät installieren, betreiben oder überwachen lassen. Solche zentralen Funktionalitäten leistet oder initiiert die zentrale Plattform.

Neben der Nutzung von ***S*** aus seinem eigenen Haushalt heraus kann der Nutzer auf seine Anwendungen auch von unterwegs zugreifen. Dazu bietet die zentrale Plattform einen Zugang aus dem Internet heraus und leitet Requests/Anfragen von z.B. einem internetfähigen Computer an das Haussteuerungsgerät des Nutzers weiter. Z.B. kann der Nutzer kurz vor Feierabend an einem (internetfähigem) Computer die Temperatur in seiner Wohnung heraufsetzen.

Neben der Nutzung eines einzigen Haussteuerungsgeräts kann ein Nutzer auch mehrere Haussteuerungsgeräte besitzen. Z.B. kann sich ein Haussteuerungsgerät im (Haupt-) Haushalt des Nutzers und ein weiteres in seiner Ferienwohnung befinden.

In der Regel ist das Haussteuerungsgerät mit der zentralen Plattform z.B. über das Internet verbunden. Eine lokale Nutzung des Haussteuerungsgeräts soll aber auch dann möglich sein, wenn das Haussteuerungsgerät keine Verbindung zur zentralen Plattform besitzt. Z.B. kann sich der Nutzer auch bei (gerade) nicht verfügbarer Internetverbindung lokal an dem Haussteuerungsgerät anmelden und beispielsweise Zimmertemperaturen einstellen.

### Figurenbeschreibung

Figur 1 zeigt die Visualisierung des Problemkontexts;
Figur 2 zeigt die Hierarchieebenen im Kontext der Hausautomatisierung;
Figur 3 zeigt die Hierarchieebenen losgelöst vom Kontext der Hausautomatisierung.

### Beschreibung der Ausführungsform der Erfindung:

In diesem Kapitel wird das zur Patentierung vorgeschlagene Verfahren zur Problemlösung der oben genannten Problemstellung beschrieben.

Das Verfahren ist jeweils für einzelne (Klassen von) Hierarchieebenen beschrieben. Dabei differenziert sich vor allem *die* oberste Hierarchieebene von *den* mittleren Hierarchieebenen. Die unterste Ebene lässt sich als ein Spezialfall einer mittleren Ebene betrachten.

Im Gegensatz zum bekannten Stand der Technik ist der erfindungsgemäße Lösungsansatz durch die physische und lokale Trennung von Hierarchieebenen gekennzeichnet.

Somit kann es im offline Modus vorkommen, dass einzelne Hierarchieebenen und damit verbundene Berechtigungen zeitweise modular in dem Gesamtsystem hinzufügbar oder abschaltbar konzipiert sein müssen.

Erfindungsgemäß wird dabei sichergestellt, dass die Zugangs- und Zugriffssicherheit jederzeit sichergestellt ist.

Das Verfahren wird im Folgenden zunächst konkret im Kontext der oben beschriebenen Hausautomatisierung präzisiert. Weiter unten folgt eine zweite, vom konkreten Kontext abstrahierte, generische Darstellung des Verfahrens.

### Hierarchieebenen im Kontext der Hausautomatisierung

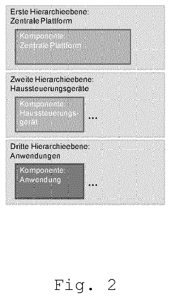

Die Einteilung der Hierarchieebenen gliedert sich in Bezug auf die oben, konkret beschriebene Hausautomatisierung wie im Folgenden dargestellt. Figur 2 veranschaulicht die Hierarchieebenen im Kontext der Hausautomatisierung.
▪ Erste Hierarchieebene: Zentrale Plattform
▪ Zweite Hierarchieebene: Haussteuerungsgerät
▪ Dritte Hierarchieebene: Anwendungen

### Erste Hierarchieebene: Zentrale Plattform

Das Verfahren wird für die erste Hierarchieebene, die zentrale Plattform, in Bezug auf die oben, konkret beschriebene Hausautomatisierung wie folgt definiert.

### Registrierung des Nutzers

### ■ Initiale Registrierung des Nutzers

Die initiale Registrierung des Nutzers geschieht mit dem Hinterlegen der Identität (z.B. des Benutzernamens) und der Credentials (z.B. Benutzername und Passwort) an der zentralen Plattform.

### Selbstregistrierung des Haussteuerungsgerätes

### ▪ Selbstregistrierung des Haussteuerungsgerätes

Das Haussteuerungsgerät wird an Strom und Internet angeschlossen. Es meldet sich selbständig an der zentralen Plattform mit einer eigenen Identität (z.B. der Gerätenummer) an. Das Gerät meldet sich als noch keinem Nutzer zugeordnet an.

### Inbesitznahme eines Haussteuerungsgerätes

### ▪ Identifizierung des Haussteuerungsgeräts

Der authentifizierte (s.u.) Nutzer identifiziert das in zu Besitz nehmende Haussteuerungsgerät durch Eingabe der Identität des Geräts (z.B. der Gerätenummer).

### ▪ Überprüfung des Besitzverhältnisses

Der Nutzer gibt an einem geeigneten Interface des Haussteuerungsgeräts (z.B. einem lokalen Web-Server) ein Credential (z.B. Benutzername und Passwort, eine Zufallszahl (die Zufallszahl wurde ggf. dem Kunden im vorgelagerten Schritt mitgeteilt, oder ähnliches) an. Das Haussteuerungsgerät schickt dieses Credential an die zentrale Plattform. Mit diesem Schritt stellt die zentrale Plattform sicher, dass sich das Haussteuerungsgerät (in diesem Moment) im Besitz (der Nutzer hatte gerade direkten, händischen Zugriff auf das Haussteuerungsgerät, bzw. mittelbaren Zugriff, aus ein- und demselben LAN, indem sich z.B. der Browser des Nutzers und das Haussteuerungsgerät befinden.) dieses Nutzers befindet.

### ▪ Hinterlegung von Credentials auf dem Haussteuerungsgerät

Die Identität des Nutzers (z.B. des Benutzernamens) und dessen Credentials (z.B. Benutzername und Passwort, Benutzername und ein Hashwert des Passworts oder andere geeignete Credentials) werden im Haussteuerungsgerät hinterlegt.

### Online Nutzung

### ▪ Authentifizierung

Die Authentifizierung geschieht an der zentralen Plattform mit der Identität (z.B. Benutzername) und den Credentials (z.B. Benutzername und Passwort) des Nutzers.

### ▪ Autorisierung und Nutzung

Die Autorisierung des Nutzers zur Nutzung der Funktionen der zentralen Plattform erfolgt in der Plattform. Bei der Autorisierung wird das Rechtemodell der Plattform zugrunde gelegt.

### ▪ Weiterleitung

Die zentrale Plattform leitet Requests/Anfragen z.B. von einem internetfähigen Computer zu den Komponenten der zweiten Hierarchieebene, den Haussteuerungsgeräten, weiter. Requests werden nur an die Haussteuerungsgeräte weitergeleitet, an denen der Nutzer Nutzungsrechte besitzt.

### Zweiter Hierarchieebene: Haussteuerungsgeräte

Das Verfahren wird für die zweite Hierarchieebene, die Haussteuerungsgeräte, in Bezug auf die oben, konkret beschriebene Hausautomatisierung wie folgt definiert.

### Online Authentifizierung

### ▪ (Online) Authentifizierung

Die Authentifizierung der Identität des Nutzers erfolgt an der zentralen Plattform. Die dort festgestellte Authentizität wird von den Haussteuerungsgeräten übernommen.

### Offline Authentifizierung

### ▪ Offline Authentifizierung

Ist das Haussteuerungsgerät offline, erfolgt die Authentifizierung der Identität des Nutzers lokal am Haussteuerungsgerät mittels der auf dem Gerät hinterlegten Identität des Nutzers, sowie dessen hinterlegten Credentials. Ein Haussteuerungsgerät ist im Zustand offline wenn es nicht mit der zentralen Plattform verbunden ist. Lokal bedeutet, dass das Haussteuerungsgerät nicht über das Internet gesteuert wird. Vielmehr ist z.B. ein Computer über z.B. das Heimnetzwerk mit dem Haussteuerungsgerät zur Steuerung verbunden.

### (Online und offline) Nutzung

### ▪ Autorisierung und Nutzung

Die Autorisierung des Nutzers zur Nutzung der Funktionen des Haussteuerungsgerätes erfolgt im Haussteuerungsgerät. Bei der Autorisierung wird das Rechtemodell des Haussteuerungsgeräts zugrunde gelegt.

### ▪ Weiterleitung

Das Haussteuerungsgerät autorisiert die Weiterleitung von Requests zu Komponenten der dritten Hierarchieebene, den Anwendungen. Konkret werden Requests nur an die Anwendungen weitergeleitet an denen der Nutzer Nutzungsrechte besitzt.

### Dritte Hierarchieebene: Anwendungen

Das Verfahren wird für die dritte Hierarchieebene, die Anwendungen, in Bezug auf die oben, konkret beschriebene Hausautomatisierung wie folgt definiert.

### Online Authentifizierung

### ▪ (Online) Authentifizierung

Die Authentifizierung der Identität des Nutzers erfolgt an der zentralen Plattform oder am Haussteuerungsgerät und wird von den Anwendungen übernommen.

### Offline Authentifizierung

### ▪ Offline Authentifizierung

Eine direkte Authentifizierung an der Anwendung ist zwar durch das hier beschriebene Verfahren denkbar, aber für die hier konkret beschriebene Hausautomatisierung nicht nötig: Eine Anwendung kann sich nicht im offline Zustand befinden.

### (Online und offline) Nutzung

### ▪ Autorisierung und Nutzung

Die Autorisierung des Nutzers zur Nutzung der Funktionen der Anwendung erfolgt in der Anwendung. Bei der Autorisierung wird das Rechtemodell der Anwendung zugrunde gelegt.

### ▪ Weiterleitung

Ein Weiterleiten von Requests ist nicht nötig, da es keine vierte Hierarchieebene gibt.

### Hierarchieebenen losgelöst vom Kontext der Hausautomatisierung

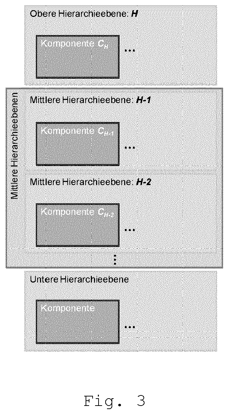

Die Einteilung der Hierarchieebenen gliedert sich in Bezug losgelöst von der oben, konkret beschriebenen Hausautomatisierung wie unten dargestellt. Fig. 3 veranschaulicht die Hierarchieebenen im Kontext der Hausautomatisierung.
▪ Obere Hierarchieebene ***H***
▪ Mittlere Hierarchieebenen z.B. ***H-1, H-2,* ...**
▪ Untere Hierarchieebene

Die oberste Hierarchieebene ***H*** muss vorhanden sein. Die mittleren Hierarchieebenen können beliebig oft vorhanden sein. Die unterste Hierarchieebene ist vorhanden oder fällt trivialer Weise mit der obersten Hierarchieebene zusammen.

### Obere Hierarchieebene

Für die oberste Hierarchieebene ***H*** wird das Verfahren, losgelöst vom Bezug auf die oben, konkret beschriebene Hausautomatisierung, wie folgt definiert.

### Registrierung des Nutzers

### ▪ Initiale Registrierung des Nutzers

Die Registrierung des Nutzers erfolgt mit dem Hinterlegen der Identität und der Credentials an einer Komponente der Hierarchieebene ***H,*** z.B. der Komponente ***C_{H}**.*

### Selbstregistrierung einer Komponente

### ▪ Selbstregistrierung einer Komponente

Eine Komponente (z.B. ***C_{H-1}**, **C_{H-2}**,* ...) registriert sich mit ihrer Identität selbständig an einer Komponente einer höheren Hierarchieebene, z.B. an der Komponente ***C_{H}*** der Hierarchieebene ***H*.** Die Komponente meldet sich als noch keinem Nutzer zugeordnet.

### Inbesitznahme eines Haussteuerungsgerätes

### ▪ Identifizierung der Komponente

Der Nutzer identifiziert die in zu Besitz nehmende Komponente (z.B. ***C_{H-1}**, **C_{H-2}**,* ...) durch Eingabe der Identität der Komponente.

### ▪ Überprüfung des Besitzverhältnisses

Der Nutzer gibt an einem geeigneten Interface der Komponente (z.B. ***C_{H-1}**, **C_{H-2}**,* ...) ein geeignetes Credential an. Die Komponente schickt dieses Credential an die Komponente ***C_{H}*** der Hierarchieebene ***H***. Die Komponente ***C_{H}*** authentifiziert das Credential und damit das Besitzverhältnis.

### ▪ Hinterlegung von Credentials in der Komponente

Die Identität des Nutzers und dessen Credentials werden in der Komponente (z.B. ***C_{H-1}**, **C_{H-2}**,* ...) hinterlegt.

### Online Athentifizierung

### ▪ Authentifizierung

Die Authentifizierung der Identität des Nutzers erfolgt an einer Komponente ***C_{H}*** der Hierarchieebene ***H*** mit den jeweiligen Credentials ***C*** des Nutzers.

### (Online) Nutzung

### ▪ Autorisierung und Nutzung

Autorisierung der Nutzung der Funktionen der Komponente ***C_{H}**.*

### ▪ Weiterleitung

Autorisierung der Weiterleitung von Requests zu Komponenten ***C_{H-1}*** auf der nächsten Hierarchieebene ***H-1.***

### Mittlere Hierarchieebenen

Für eine mittlere Hierarchieebene, z.B. der Hierarchieebene ***H-1***, wird das Verfahren, losgelöst vom Bezug auf die oben, konkret beschriebene Hausautomatisierung, wie folgt definiert.

### Online Authentifizierung

### ▪ (Online) Authentifizierung

Die Authentifizierung der Identität des Nutzers erfolgt durch eine Komponente z.B. ***C_{H}*** einer vorgelagerten Hierarchieebene z.B. ***H***. Die dort festgestellte Authentizität wird von der Komponente der betrachteten mittleren Hierarchieebene z.B. der Komponente ***C_{H-1}*** der Ebene ***H-1*** übernommen.

### Offline Authentifizierung

### ▪ Offline Authentifizierung

Ist z.B. die Komponente C_{H-1} der Ebene H-1 offline, dann erfolgt die Authentifizierung der Identität des Nutzers lokal an dieser Komponente C_{H-1} und mittels der auf der Komponente hinterlegten Identität des Nutzers sowie dessen hinterlegten Credentials.

Offline bedeutet, dass diese Komponente (z.B. Komponente C_{H-1}) nicht mit einer anderen Komponente (z.B. C_{H},) einer höher liegenden Hierarchieebene (z.B. H) verbunden ist. Eine offline Authentifizierung ist nur dann Bestandteil des Verfahrens, wenn sich die Komponente im Zustand offline befinden kann.

### (Online und offline) Nutzung

### ▪ Autorisierung und Nutzung

Autorisierung der Nutzung der Funktionen der Komponente ***C_{H-1}**.*

Dabei können verschiedene Komponenten dieser Hierarchieebene (ihre jeweiligen) Funktionen unterschiedlich autorisieren.

### ▪ Weiterleitung

Autorisierung der Weiterleitung von Requests zu Komponenten ***C_{H-2}*** auf der (über-)nächsten Hierarchieebene ***H-2**.*

### Untere Hierarchieebene

Für die unterste Hierarchieebene wird das Verfahren, losgelöst vom Bezug auf die oben, konkret beschriebene Hausautomatisierung, genauso definiert wie für eine mittlere Hierarchieebene.

Trivialer Weise kann die unterste Hierarchieebene keine Weiterleitung anbieten.

## Patentansprüche

1. Verfahren zur Steuerung des Zugriffs auf ein System zur Unterstützung von Haussteuerungsaktivitäten, umfassend eine zentrale Plattform, auf die über das Internet durch einen Benutzer mit Hilfe eines Endgerätes zugegriffen wird;
ein Haussteuerungsgerät, das im Haushalt des Benutzers angeordnet ist, und das mit der zentralen Plattform über das Internet verbunden ist, und das mit Appliances im Haushalt des Benutzers verbunden ist;
Anwendungen, die auf dem Haussteuerungsgerät laufen, um die Appliances zu steuern, regeln und/oder zu programmieren, so dass die zentrale Plattform, das Haussteuerungsgerät und die Anwendungen eine Hierarchie bilden,
wobei eine hierarchische Autorisierung des Benutzers durch sein Endgerät, wobei der Zugriff im online Modus, bei dem eine Verbindung zwischen zentraler Plattform und Haussteuerungsgerät gegeben ist, ausgehend von einer Authentifizierung an der zentralen Plattform gewährt wird, wobei bei der hierarchischen Autorisierung Benutzerrechte für das Haussteuerungsgerät und die Anwendungen in Abhängigkeit von der Authentifizierung an der zentralen Plattform von der zentralen Plattenform abgeleitet werden, und der Benutzer durch sein Endgerät nur das Recht auf Zugriff auf das Hausteuerungsgerät und die Anwendungen hat, wenn die Authentifizierung an der zentrale Plattform erfolgreich ist und bei der Autorisierung Benutzerrechte den Zugriff auf die Haussteuerungsgeräte und die Anwendungen erlauben,
**dadurch gekennzeichnet, dass**
im offline Modus, bei dem eine Verbindung zwischen zentraler Plattform und dem Haussteuerungsgerät nicht gegeben ist, eine Authentifizierung am Haussteuerungsgerät durch das Endgerät erfolgt, und bei der Autorisierung lokal auf dem Haussteuerungsgerät abgelegte Benutzerrechte den Zugriff steuern, die sich von den Benutzerrechten im online Modus unterscheiden und eine Untermenge davon darstellt ,
wobei der Zugriff auf die Anwendungen vom Haussteuerungsgerät gewährt wird, indem die anwendungsspezifischen Benutzerrechte hierarchisch abgeleitet werden, woraus sich ergibt, dass ein Benutzer durch sein Endgerät nur das Recht auf Zugriff auf die Anwendungen hat, wenn das Recht auf den Zugriff sowohl auf dem Haussteuerungsgerät als auch auf der zentrale Plattform vorhanden ist.

2. Das Verfahren nach dem vorhergehenden Anspruch, wobei Rechte auf den Zugriff auf Funktionen der Anwendung gegeben sind und ein Benutzer durch das Endgerät nur das Recht auf den Zugriff auf die Funktion hat, wenn das Recht auf den Zugriff auf die Anwendung gegeben ist.

3. Das Verfahren nach einem oder mehreren der vorhergehenden Ansprüche, wobei sich der Benutzer durch sein Endgerät im offline Modus am lokalen Haussteuerungsgerät autorisiert, wobei die Zugriffsrechte lokal vom Haussteuerungsgerät bestimmt werden und die Zugriffsrechte auf die Anwendungen bestimmen;
insbesondere wobei sich die lokalen Rechte auf dem Haussteuerungsgerät von den Rechten der zentralen Plattform ableiten und dort gespeichert werden oder von diesen abweichen, so dass im offline Modus andere Rechte gelten als im online Modus.

4. Das Verfahren nach einem oder mehreren der vorhergehenden Ansprüche, wobei über die zentrale Plattform Zugriff auf einen Anwendungs-Shop gegeben ist, um Anwendungen für das Haussteuerungsgerät herunterzuladen.

5. Das Verfahren nach einem oder mehreren der vorhergehenden Ansprüche, wobei die Einstellungen des Haussteuerungsgerätes und/oder die Anwendungen auf der zentralen Plattform gesichert werden, um eine Wiederherstellung des Hausteuerungsgerätes zu ermöglichen.

6. Das Verfahren nach einem oder mehreren der vorhergehenden Ansprüche, wobei die zentrale Plattform eine Vielzahl von Haussteuerungsgeräten für eine und/oder mehrere Benutzer verwaltet.

7. Das Verfahren nach einem oder mehreren der vorhergehenden Ansprüche, wobei die zentrale Plattform im online Modus die Anfragen und/oder Kommandos autorisiert und an das Haussteuerungsgerät weiterleitet.

8. System zur Steuerung des Zugriffs auf Haussteuerungsaktivitäten, umfassend eine zentrale Plattform, die über das Internet durch einen Benutzer durch sein Endgerät zugreifbar ist;
ein Haussteuerungsgerät, das im Haushalt des Benutzers angeordnet ist, und das mit der zentralen Plattform über das Internet verbunden ist, und das mit Appliances im Haushalt des Benutzers verbunden ist;
Anwendungen, die auf dem Haussteuerungsgerät installiert sind und dort ausgeführt werden, um die Appliances zu steuern, regeln und/oder zu programmieren, so dass die zentrale Plattform, das Haussteuerungsgerät und die Anwendungen eine Hierarchie bilden,;
mit Mittel um eine hierarchische Autorisierung des Benutzers über sein Endgerät zu ermöglichen,
indem der Zugriff im online Modus, bei dem eine Verbindung zwischen zentraler Plattform und Haussteuerungsgerät gegeben ist, ausgehend von einer Authentifizierung an der zentralen Plattform gewährt wird, wobei bei der hierarchischen Autorisierung Benutzerrechte für das Haussteuerungsgerät und die Anwendungen in Abhängigkeit von der Authentifizierung an der zentralen Plattform von der zentralen Plattenform abgeleitet werden, und der Benutzer durch sein Endgerät nur das Recht auf Zugriff auf das Hausteuerungsgerät und die Anwendungen hat, wenn die Authentifizierung an der zentrale Plattform erfolgreich ist und bei der Autorisierung Benutzerrechte den Zugriff auf die Haussteuerungsgeräte und die Anwendungen erlauben,
**dadurch gekennzeichnet,**
**dass** im offline Modus, bei dem eine Verbindung zwischen zentraler Plattform und dem Haussteuerungsgerät nicht gegeben ist, eine Authentifizierung am Haussteuerungsgerät erfolgt, und bei der Autorisierung lokal auf dem Haussteuerungsgerät abgelegte Benutzerrechte den Zugriff steuern, die sich von den Benutzerrechten im online Modus unterscheiden und eine Untermenge davon darstellt,
wobei der Zugriff auf die Anwendungen vom Haussteuerungsgerät gewährt wird, indem die anwendungsspezifischen Benutzerrechte hierarchisch abgeleitet werden, woraus sich ergibt, dass ein Benutzer durch sein Endgerät nur das Recht auf Zugriff auf die Anwendungen hat, wenn das Recht auf den Zugriff sowohl auf dem Haussteuerungsgerät als auch auf der zentrale Plattform vorhanden ist.

9. Das System nach dem vorhergehenden Anspruch, wobei Rechte auf den Zugriff auf Funktionen der Anwendung gegeben sind und ein Benutzer durch das Endgerät nur das Recht auf den Zugriff auf die Funktion hat, wenn das Recht auf den Zugriff auf die Anwendung gegeben ist.

10. Das System nach einem oder mehreren der vorhergehenden Systemansprüche, wobei im offline Modus das System ausgebildet ist, so dass sich der Benutzer über das Endgerät den Zugriff am lokalen Haussteuerungsgerät autorisiert, die Rechte lokal vom Haussteuerungsgerät bestimmt werden und somit die anwendungsspezifischen Benutzerrechte an den Anwendungen bestimmt werden,
insbesondere wobei sich die lokalen Rechte auf dem Haussteuerungsgerät von den Rechten der zentralen Plattform ableiten und dort speicherbar sind, oder von diesen abweichen, so dass im offline Modus andere Rechte gelten als im online Modus.

11. Das System nach einem oder mehreren der vorhergehenden Systemansprüche, wobei über die zentrale Plattform Zugriff auf einen Anwendungs-Shop gegeben ist, um Anwendungen für das Haussteuerungsgerät herunterzuladen.

12. Das System nach einem oder mehreren der vorhergehenden Systemansprüche, wobei die Einstellungen des Haussteuerungsgerätes und/oder der Anwendungen auf der zentralen Plattform sicherbar sind, um eine Wiederherstellung des Hausteuerungsgerätes zu ermöglichen.

13. Das System nach einem oder mehreren der vorhergehenden Systemansprüche, wobei die zentrale Plattform ausgebildet ist,
um eine Vielzahl von Haussteuerungsgeräten zu verwalten.

14. Das System nach einem oder mehreren der vorhergehenden Systemansprüche, wobei die zentrale Plattform ausgebildet ist,
um mehrere Benutzer zu verwalten.

15. Das System nach einem oder mehreren der vorhergehenden Systemansprüche, wobei die zentrale Plattform ausgebildet ist,
um im online Modus die Anfragen und/oder Kommandos an das Haussteuerungsgerät weiterzuleiten.

## Claims

1. A method of controlling access to a home control activity support system comprising a central platform accessed via the Internet by a user using a terminal device
a home control device which is located in the user's household and which is connected to the central platform via the Internet, and which is connected to appliances in the user's household;
applications running on the home control device to control, regulate and/or program the appliances, so that the central platform, the home control device and the applications form a hierarchy,
wherein a hierarchical authorisation of the user by his terminal, access in online mode, in which a connection between the central platform and the home control device is given, is granted on the basis of an authentication on the central platform, wherein in the hierarchical authorisation, user rights for the home control device and the applications are derived from the central plattform form as a function of the authentication on the central platform, and the user only has the right to access the home control device and the applications through his terminal device if the authentication at the central platform is successful and user rights during authorisation allow access to the home control devices and the applications, **characterized in that** in offline mode, in which there is no connection between the central platform and the home control device, authentication on the home control device is carried out by the terminal device, and during authorization user rights stored locally on the home control device control access, wherein the user rights are different from the user rights in online mode and are a subset thereof,
wherein access to the applications is granted by the home control device by deriving the application-specific user rights hierarchically, which implies that a user has the right to access the applications through his terminal device only if the right to access is present on both the home control device and the central platform.

2. The method according to the previous claim, where rights of access to functions of the application are given and a user through the terminal only has the right to access the function if the right to access the application is given.

3. The method according to one or more of the preceding claims, where the user authorises himself through his terminal device in offline mode on the local home control device, wherein the access rights are determined locally by the home control device and determine the access rights to the applications;
in particular wherein the local rights on the home control device are derived from the rights stored in the central platform or are different from them, so that different rights apply in offline mode than in online mode.

4. The method according to one or more of the previous claims, wherein access via the central platform to an application shop to download applications for the home control device is provided.

5. The method according to one or more of the previous claims, wherein the settings of the home control device and/or the applications are saved on the central platform in order to allow the home control device to be restored.

6. The method according to one or more of the previous claims, wherein the central platform manages a large number of home control devices for one and/or more users.

7. The method according to one or more of the previous claims, wherein the central platform in online mode authorises the requests and/or commands and forwards them to the home control device.

8. A system for controlling access to home control activities, comprising a central platform accessible via the Internet by a user through his terminal;
a home control device located in the user's household, connected to the central platform via the Internet, and connected to appliances in the user's household; applications installed on and running on the home control device to control, regulate and/or program the appliances so that the central platform, the home control device and the applications form a hierarchy, with allowing hierarchical authorisation of the user via his terminal,
by granting access in online mode, in which a connection is provided between the central platform and the home control device, on the basis of authentication on the central platform, in which hierarchical authorisation user rights for the home control device and the applications are derived from the central plattform as a function of the authentication on the central platform, and the user has the right to access the home control device and the applications through his terminal only if the authentication on the central platform is successful and in which authorisation user rights allow access to the home control devices and the applications,
**characterised by** an offline mode, in which there is no connection between the central platform and the home control device, so that authentication takes place on the home control device, and that during authorisation user rights stored locally on the home control device control access, which are different from the user rights in online mode and represent a subset thereof, wherein access to the applications is granted by the home control device by deriving the application-specific user rights hierarchically, which implies that a user has the right to access the applications through his terminal device only if the right to access is present on both the home control device and the central platform.

9. The system according to the previous claim, wherein rights to access functions of the application are given and a user through the terminal device has the right to access the function only when the right to access the application is given.

10. The system according to one or more of the previous system claims, wherein in offline mode the system is designed so that the user authorises access to the local home control device via the terminal device, the rights are determined locally by the home control device and thus the application-specific user rights to the applications are determined,
in particular wherein the local rights on the home control device are derived from the rights of the central platform and can be stored there, or differ from them, so that different rights apply in offline mode than in online mode.

11. The system according to one or more of the previous system requirements, wherein access to an application shop via the central platform to download applications for the home control device is provided.

12. The system according to one or more of the previous system claims, wherein the settings of the home control device and/or applications on the central platform are securable to allow recovery of the home control device.

13. The system according to one or more of the previous system requirements, wherein the central platform is designed to manage a large number of home control devices.

14. The system according to one or more of the previous system requirements, wherein the central platform is designed to manage multiple users.

15. The system according to one or more of the previous system requirements, wherein the central platform is designed to forward requests and/or commands to the home control device in online mode.

## Revendications

1. Un procédé de contrôle d'accès à un système de support d'activité domotique, comprenant une plate-forme centrale accessible par un utilisateur depuis le réseau Internet;
un dispositif domotique qui se trouve dans le domicile de l'utilisateur et qui est connecté à la plate-forme centrale via Internet et qui est connecté à des appareils ménagers de l'utilisateur;
des applications qui s'exécutent sur le dispositif domotique pour commander, réguler et/ou programmer les appareils; de telle sorte que la plateforme centrale, le dispositif domotique et les applications forment une hiérarchie ;
dans lequel on accorde, sur la base d'une authentification sur la plateforme, une autorisation hiérarchisée de l'utilisateur via son terminal, avec une connexion entre la plateforme centrale et le dispositif domotique, dans lequel on dérive de la plateforme centrale des droits d'utilisateur d'autorisation hiérarchisée pour le dispositif domotique et les applications en fonction de l'authentification sur la plateforme centrale, et seul l'utilisateur a le droit d'accéder au dispositif domotique et aux applications au travers son terminal en cas de succès de l'authentification au niveau de la plateforme centrale et les droits d'utilisateur durant l'autorisation permettent l'accès aux dispositifs domotiques et aux applications,
**caractérisé en ce que** en mode déconnecté, dans lequel il n'y aucune connexion entre la plateforme centrale et le dispositif domotique, on effectue une authentification sur le dispositif domotique via le terminal, et durant l'autorisation les droits d'utilisateur stockés localement sur le dispositif domotique commandent l'accès, dans lequel les droits d'utilisateur sont différents des droits d'utilisateur en mode connecté et sont un sous-groupe de ces derniers,
dans lequel l'accès aux applications est accordé par le dispositif domotique en dérivant de manière hiérarchisée les droits d'utilisateur spécifiques aux applications, ce qui implique qu'un utilisateur a les droits d'accéder aux application au travers son terminal seulement si le droit d'accès est présent à la fois sur le dispositif domotique et sur la plateforme centrale.

2. Le procédé selon la revendication précédente, dans lequel des droits d'accès aux fonctions de l'application sont donnés et un utilisateur n'a le droit d'accéder à la fonction via son terminal que si lui est donné le droit d'accéder à l'application.

3. Le procédé selon une ou plusieurs des revendications précédentes, dans lequel l'utilisateur s'autorise en mode hors ligne sur le dispositif domotique au travers son terminal, dans lequel les droits d'accès sont déterminés localement par le dispositif domotique et déterminent les droits d'accès aux applications ;
en particulier dans lequel les droits locaux sur le dispositif domotique sont dérivés des droits de la plate-forme centrale et y sont stockés ou diffèrent de ceux-ci, de sorte que des droits différents s'appliquent en mode hors ligne et en mode en ligne.

4. Le procédé selon une ou plusieurs des revendications précédentes, dans lequel l'accès à une boutique d'applications est donné via la plate-forme centrale afin de télécharger des applications pour le dispositif de domotique.

5. Le procédé selon une ou plusieurs des revendications précédentes, dans lequel les paramètres du dispositif de domotique et/ou les applications sont enregistrés sur la plate-forme centrale afin de permettre la restauration du dispositif de domotique.

6. Le procédé selon une ou plusieurs des revendications précédentes, dans lequel la plate-forme centrale gère un grand nombre de dispositifs domotiques pour un et/ou plusieurs utilisateurs.

7. Le procédé selon une ou plusieurs des revendications précédentes, dans lequel la plate-forme centrale autorise les demandes et/ou des commandes en mode en ligne et les transmet au dispositif de domotique.

8. Un système pour commander un accès à des activités de domotiques, comprenant une plate-forme centrale accessible par un utilisateur via son terminal connecté au réseau Internet;
un dispositif domotique qui se trouve dans le domicile de l'utilisateur et qui est connecté à la plate-forme centrale via le réseau Internet et qui est connecté à des appareils ménagers de l'utilisateur;
des applications qui sont installées et qui s'exécutent sur le dispositif de domotique pour commander, réguler et/ou programmer les appareils de telle sorte que la plateforme centrale, le dispositif de domotique et les applications forment une hiérarchie, permettant une autorisation hiérarchisée de l'utilisateur via son terminal,
avec l'attribution d'un accès en mode en ligne, dans lequel on accorde, sur la base d'une authentification sur la plateforme, une autorisation hiérarchisée de l'utilisateur via son terminal, avec une connexion entre la plateforme centrale et le dispositif domotique, dans lequel on dérive de la plateforme centrale des droits d'utilisateur d'autorisation hiérarchisée pour le dispositif domotique et les applications en fonction de l'authentification sur la plateforme centrale, et l'utilisateur a le droit d'accéder au dispositif domotique et aux applications au travers son terminal seulement en cas de succès de l'authentification au niveau de la plateforme centrale et dans lequel les droits d'utilisateur durant l'autorisation permettent l'accès aux dispositifs domotiques et aux applications,
**caractérisé par** un mode hors-ligne, dans lequel il n'y a aucune connexion entre la plateforme centrale et le dispositif domotique, de telle sorte qu'une authentification est effectuée par le terminal, et durant l'autorisation les droits d'utilisateur stockés localement sur le dispositif domotique d'accès, sont différent des droits d'utilisateur en mode connecté et sont un sous-groupe de ces derniers,
dans lequel l'accès aux applications est accordé par le dispositif domotique en dérivant les droits d'utilisateur spécifiques aux applications de manière hiérarchisée, ce qui implique qu'un utilisateur a les droits d'accéder aux application au travers son terminal seulement si le droit d'accès est présent à la fois sur le dispositif domotique et sur la plateforme centrale.

9. Le système selon la revendication précédente, dans lequel des droits d'accès aux fonctions de l'application sont donnés et un utilisateur n'a le droit d'accéder à la fonction que si le droit d'accéder à l'application est donné.

10. Le système selon une ou plusieurs des revendications de système précédentes dans lequel, en mode hors ligne, le système est conçu de sorte que l'utilisateur autorise l'accès au dispositif domotique local via le terminal, les droits sont déterminés localement par le dispositif domotique et ainsi les droits d'utilisateur spécifiques à l'application sur les applications sont déterminés,
en particulier dans lequel les droits locaux sur le dispositif de domotique sont dérivés des droits de la plate-forme centrale et peuvent y être stockés, ou différer de ceux-ci, de sorte que des droits différents s'appliquent en mode hors ligne et en mode en ligne.

11. Le système selon une ou plusieurs des revendications précédentes, dans lequel l'accès à une boutique d'applications est donné via la plate-forme centrale afin de télécharger des applications pour le dispositif domotique.

12. Le système selon une ou plusieurs des revendications précédentes, dans lequel les réglages du dispositif de domotique et/ou les applications peuvent être enregistrés sur la plate-forme centrale afin de permettre la restauration du dispositif de domotique.

13. Le système selon une ou plusieurs des revendications précédentes du système, dans lequel la plate-forme centrale est conçue pour gérer un grand nombre de dispositifs domotiques.

14. Le système selon une ou plusieurs des revendications précédentes du système, dans lequel la plate-forme centrale est conçue pour gérer de multiples utilisateurs.

15. Le système selon une ou plusieurs des revendications précédentes du système, dans lequel la plate-forme centrale est conçue pour transmettre les demandes et/ou commandes au dispositif domotique en mode en ligne.
